# EUROPÄISCHE PATENTSCHRIFT

(11) **EP 0 822 351 B1**
(45) Veröffentlichungstag und Bekanntmachung des Hinweises auf die Patenterteilung: **18.09.2002**
(21) Anmeldenummer: 97111046.5
(22) Anmeldetag: 02.07.1997
(51) Int. Cl.: F16D 65/54, F16D 65/16

(54) **Bremsanlage, insbesondere Scheibenbremse in Schwimmsattel-Bauart, für ein Kraftfahrzeug**
Brake system,in particular floating caliper-type disc brake,for a motor vehicle
Système de freinage, en particulier frein à disque du type à étrier coulissant, pour véhicule automobile

(30) Priorität: 24.07.1996 DE 19629937
(43) Veröffentlichungstag der Anmeldung: 04.02.1998
(73) Patentinhaber: SIEMENS AKTIENGESELLSCHAFT, 80333 München (DE)
(72) Erfinder: Mohr, Volker, Dipl.-Ing. (FH), 97453 Forst (DE); Schulz, Hermann, Dipl.-Ing. (FH), 97355 Kleinlangheim (DE)

(56) Entgegenhaltungen:
- DE-A- 4 107 473
- DE-A- 4 224 378
- DE-A- 19 511 287
- US-A- 3 690 417
- US-A- 4 957 193

## Beschreibung

Die Erfindung bezieht sich auf eine Bremsanlage, insbesondere Scheibenbremse in Schwimmsattel-Bauart, für ein Kraftfahrzeug gemäß Patentanspruch 1.

Durch die DE-A1-38 10 012 ist eine Bremsanlage bekannt, bei der ein in seiner Drehrichtung umkehrbarer Elektromotor mit einer über ein Schraubgewinde axial verstellbaren Welle den Bremsbelag gegen eine Bremsscheibe andrückt bzw. von dieser abhebt; zur Erzielung einer selbstverstärkenden Komponente wird der Bremsbelag für eine Schwenkbewegung um ein zur Seitenfläche der Bremsscheibe parallele und seitwärts von dieser Fläche beabstandete Achse, die im wesentlichen im rechten Winkel zu einer zum Außenumfang tangentialen und in der Ebene der Bremsscheibe verlaufenden Linie in der Drehrichtung der Bremsscheibe stromab vom Bremsbelag angeordnet ist, gelagert, so daß die Reibungskraft zwischen dem Bremsbelag und der Bremsscheibe eine zu der von dem Elektromotor zum Andruck der Bremsbeläge gegen die Bremsscheibe aufgebrachten Kraft ergänzende Komponente aufweist.

Der Erfindung liegt die Aufgabe zugrunde, bei einer durch einen Elektromotor über eine selbstverstärkende Hebelübertragung elektromechanisch betätigten Bremsanlage, insbesondere einer Scheibenbremse in Schwimmsattel-Bauart,für ein Kraftfahrzeug auf einfache Weise einen Verschleiß der Bremsbeläge selbsttätig ausgleichen zu können.

Die Lösung dieser Aufgabe gelingt erfindungsgemäß durch die Lehre des Anspruchs 1; vorteilhafte Ausgestaltungen der Erfindung sind jeweils Gegenstand der Unteransprüche.

Durch die DE-A1 41 07 473 ist eine Kraftfahrzeug-Bremsanlage mit den beiden ersten Teilmerkmalen des Anspruchs 1 bekannt.

Durch die US-A-3 690 417 ist eine Kraftfahrzeug-Bremsanlage mit Scheibenbremse in Schwimmsattel-Bauart mit dem dritten Teilmerkmal des Anspruchs 1 bekannt, wobei eine selbstverstärkende Hebelübertragung zwischen einem ersten axialen Hubantrieb eines Aktuators, der als Hydraulik-Antrieb dargestellt ist, und einem zweiten axialen Hubantrieb für die Bremsbeläge vorgesehen ist.

Durch die DE-A1 42 24 378 ist eine Bremseinheit mit einer Verschleiß-Nachstellvorrichtung derart bekannt, dass bei einem axialen Hubantrieb mit einer axial bewegbaren Druckplatte und einer dazu axial federverspannten Stützplatte jede der beiden Platten je für sich über eine radial randseitige Ratschen-Abstützung bei zunehmendem Bremsscheibenverschleiß axial nachrückbar ist.

Bei der erfindungsgemäßen Bremsanlage ist auf einfache Weise unter Beibehaltung des grundsätzlichen Aufbaus der Kraftübertragung zwischen dem Elektromotor und den Bremsbelägen lediglich durch radiale Zwischenanordnung der Ratschen-Abstützung zwischen der an sich vorhandenen Hebelübertragung und deren bremssattelseitiger Aufnahme bei jeder Bremsbetätigung eine Überprüfung des Verschleißspieles und gegebenenfalls eine selbsttätige Nachtstellung zum Ausgleich des Verschleißes möglich. Um bei steigendem Verschleiß in vorteilhafter Weise den maximalen Hubweg des motorseitigen Hubantriebes zusätzlich begrenzen zu können, ist nach einer Ausgestaltung der Erfindung eine der Abstützung der Hebelübertragung ähnliche Ratschen-Abstützung auch zwischen dem Elektromotor und dessen bremssattelseitiger Aufnahme vorgesehen.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem Axialschnitt einen mit einem schwimmend montierten Bremssattel einer Scheibenbremsanlage eines Kraftfahrzeuges integrierten elektromechanischen Radbremsaktor mit einem Elektromotor und einer Hebelübertragung;
- FIG 2: einen Schnitt durch die Anordnung gemäß FIG 1 im Schnittverlauf II-II.

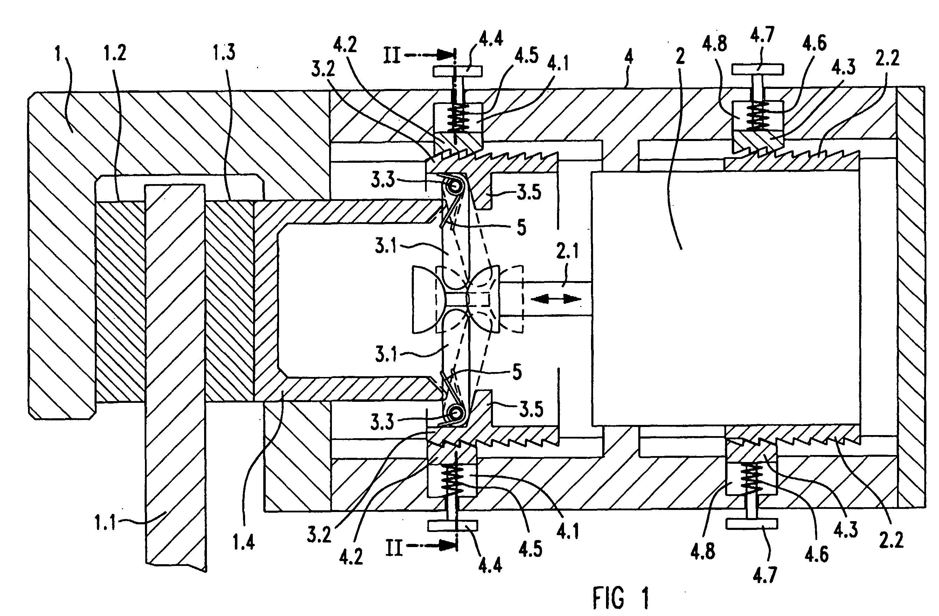

FIG 1 zeigt eine Bremsanlage für ein Rad eines Kraftfahrzeuges in sogenannter Schwimmsattelausführung, derart daß eine von einem Bremskolben 1.4 auf den einen, hier rechts vor einer Bremsscheibe 1.1 angeordneten Bremsbelag 1.3 einwirkende Kraft in gleicher Weise auf den anderen, hier links vor der Bremsscheibe 1.1 angeordneten Bremsbelag 1.2 ausgeübt wird. Mit dem Bremssattel 1 integriert, gegebenenfalls einstückig ausgeführt, ist das Gehäuse 4 eines elektromechanischen Bremsaktors. Der Bremsaktor enthält im wesentlichen einen Elektromotor 2, der nach Umsetzung seiner Rotor-Rotation über einen integrierten Spindeltrieb in eine axiale Hubbewegung mittels einer axial hin und her bewegbaren Hubstange 2.1 über eine selbstverstärkende Hebelübertragung 3 auf den Bremskolben 1.4 einwirkt. In FIG 1 sind mit ausgezogener Kontur die Hubstellung der Hubstange 2.1 sowie der Hebelübertragung 3 und des Bremskolbens 1.4 bei an die Bremsscheibe angedrückten Bremsbelägen und in gestrichelter Kontur die jeweiligen Stellungen bei gelösten Bremsbelägen eingetragen.

Der Elektromotor 2 ist zweckmäßigerweise kommutatorlos mit permanenterregtem Rotor ausgebildet, dessen Rotation in hier nicht näher dargestellter jedoch in an sich bekannter Art in einem integrierten Rollengewindeantrieb mit einer rotorseitigen Spindelmutter in einen axialen Hubantrieb der Hubstange 2.1 umgesetzt wird.

Der Elektromotor steht in ebenfalls hier nicht näher dargestellter Ausführung in allenfalls elektrisch leitungsbehafteter Steuer- bzw. Regelabhängigkeit von einer Leistungselektronik; auch zur Betätigung der Bremsbeläge durch den Bremsaktuator kann auf übliche hydraulische Betätigungen verzichtet werden.

Die kraftverstärkende Hebelübertragung 3 besteht im wesentlichen aus mehreren über den Umfang eines äußeren Hebelringes 3.4 verteilten und mit ihren radial äußeren Enden derart schwenkbar gelagerten Stellhebeln 3.1, daß deren radial innere Enden von der Hubstange 2.1 des Elektromotors 2 beaufschlagbar sind, dabei in der einen oder anderen Richtung verschwenkt werden und den an den Stellhebeln im Bereich zwischen ihren äußeren Schwenklager-Enden und ihren inneren Beaufschlagungsenden anliegenden Bremskolben 1.4, z.B. beim Bremsen, mit einer durch die gegebene Hebelwirkung bestimmten verstärkenden Kraftkomponente gegen die Bremsbeläge 1.2 bzw.1.3 und diese gegen die Bremsscheibe 1.1 drücken.

Zur einfachen verschleißausgleichenden Nachstellung ist der Hebelring 3.4 über seinen Umfang verteilt, vorzugsweise im Bereich der Schwenkpunkte der Stellhebel 3.1 mit Raststegen 3.2 versehen, die in korrespondierende Raststege 4.2 in Taschen 4.1 des Bremsaktor-Gehäuses 4 eingreifen. Die Rastvorsprünge bzw. Rastzähne der Raststege sind dabei derart ausgebildet, daß die Hebelübertragung jeweils bei einer Bremshubbetätigung durch die Hubstange 2.1 bei vorhandenem entsprechendem Verschleiß der Bremsbeläge um den Verschleißweg zahnweise in Richtung der Bremse relativ zu dem Bremsaktor-Gehäuse 4 axial verschiebbar jedoch in Gegenrichtung betriebsmäßig an einer Rückbewegung gehemmt sind.

In ihrer Bremslösestellung sind die Stellhebel 3.1 durch eine auf Zapfen 3.3 in ihrem Gelenkpunkt aufgesetzte und sich am Rücken der Stellhebel 3.1 einerseits sowie am Hebelring 3.4 bzw. dessen Raststeg 3.2 abstützende Bügelfedern 5 in die mit gestrichelter Kontur gezeichnete Lösungsstellung bis zur Hemmung durch Bügelfeder-Anschläge 3.5 gedrückt.

Der Andruck der Bügelfeder 5 gegen die Stellhebel 3.1 ist zweckmäßigerweise größer als der gegenseitige Reibungsdruck der Raststege 3.2 bzw.4.2, so daß bei einer Brems-Hubbewegung zunächst bei entsprechendem Verschleißspiel die gesamte Hebelübertragung 3 in Richtung des Bremssattels 1 nachdrückbar und in seiner neuen Stellung verrastbar ist.

Um bei zunehmendem Verschleiß einem zu weiten Verstellweg der Hubstange 2.1 mit einfachen Mitteln entgegenwirken zu können, ist für den Elektromotor 2 ebenfalls eine entsprechende Ratschen-Abstützung mit motorseitigen Raststegen 2.2 und korrespondierenden gehäuseseitigen Raststegen 4.3 vorgesehen.

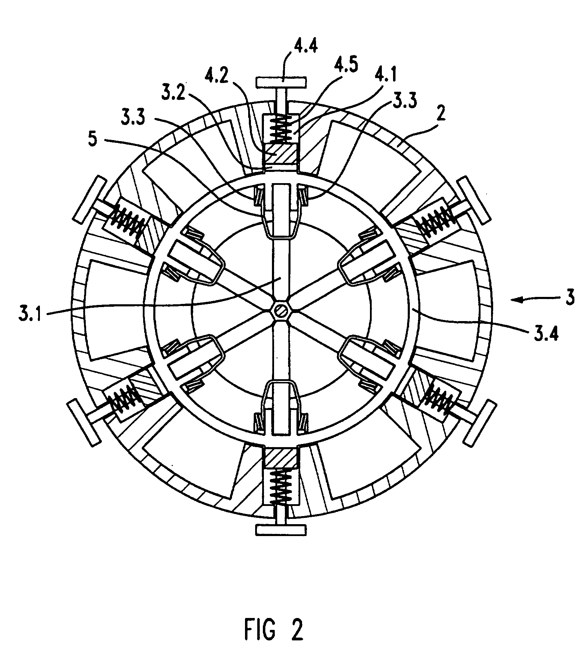

Zur einfachen Feineinstellung sind - wie aus einem Vergleich der oberen Raststege 4.2;4.3 mit den unteren Raststegen im Schnittverlauf II-II in FIG 1 - ersichtlich, Rastvorsprünge bzw. Rastzähne hebelringseitig zueinander um einen Halbzahn gegeneinander versetzt, so daß eine Zwischenzahneinstufung möglich ist; zweckmäßigerweise werden derartige zueinander versetzte Raststege wechselweise über den Umfang des Hebelringes 3.4 verteilt - wie aus einem gegenseitigen Vergleich der Stellhebel in FIG 2 ersichtlich - angeordnet.

Wie aus FIG 1 und FIG 2 ersichtlich, sind die gehäuseseitigen Raststege 4.2 bzw.4.3 in Raststegaufnahmen 4.1;4.8 mittels Raststeg-Andruckfedern 4.5;4.6 gegen die entsprechenden Raststege 3.2 bzw.2.2 der Hebelübertragung 3 bzw. des Elektromotors 2 elastisch angedrückt; für einen servicebedingten Austausch der Bremsscheiben 1.2;1.3 kann der Bremsaktor dadurch in einfacher Weise aus seiner Hemmstellung gelöst und dadurch der nötige Aktionsraum freigegeben werden, daß die gehäuseseitigen Bremsstege 4.2 bzw.4.3 mittels Lösegriffe 4.4 bzw.4.7 entgegen dem Andruck der Raststeg-Andruckfedern 4.5;4.6 in ihren Taschen 4.1;4.8 nach radial außen anhebbar sind.

## Patentansprüche

1. Bremsanlage, insbesondere Scheibenbremse in Schwimmsattel-Bauart, für ein Kraftfahrzeug
- mit einem an einem Bremssattel (1) eines jeden Rades montierten elektromagnetischen Radbremsaktor mit einem Elektromotor (2) mit einem ersten axialen Hubantrieb;
- mit einer selbstverstärkenden Hebelübertragung (3) zwischen dem ersten axialen Hubantrieb des Elektromotors einerseits und einem zweiten axialen Hubantrieb für die Bremsbeläge (1.2;1.3) andererseits;
- mit einer den Verschleiß der Bremsbeläge selbsttätig ausgleichenden mechanischen Nachstellvorrichtung nach Art einer Ratschen-Abstützung (3.2;4.2) der Hebelübertragung (3) relativ zu dem Bremssattel (1);
- mit einer aufgrund eines Verschleißes der Bremsbeläge (1.2;1.3) einen zu großen Hub des ersten axialen Hubantriebes ausgleichenden mechanischen Nachstellvorrichtung nach Art einer Ratschen-Abstützung (2.2;4.3) des Elektromotors (2) relativ zu dem Bremssattel (1).

2. Bremsanlage nach dem vorhergehenden Anspruch
- mit einer Hebelübertragung (3) in Form eines radial äußeren Hebelringes (3.4) mit sternförmig über dessen Umfang verteilten Stellhebeln (3.1), deren radial äußere Enden mittelbar bzw. unmittelbar in dem der Ratschen-Verbindung (3.2;4.2) dienenden Hebelring (3.4) schwenkbar gelagert und deren freie radial innere Enden von dem ersten axialen Hubantrieb des Elektromotors beaufschlagbar sind.

3. Bremsanlage nach dem vorhergehenden Anspruch
- mit einer Beaufschlagung des zweiten axialen Hubantriebs, insbesondere in Form eines Bremskolbens (1.4), im Hebelbereich zwischen den relativ zu dem Hebelring (3.4) schwenkbaren radial äußeren Enden der Stellhebel (3.1) einerseits und den radial inneren freien, von dem ersten Hubantrieb beaufschlagbaren Enden andererseits.

4. Bremsanlage nach zumindest einem der beiden vorhergehenden Ansprüche
- mit einer Anschlaghemmung der Stellhebel (3.1) in Gegenrichtung zur Brems-Hubrichtung durch Andruck an den Hebelring (3.4).

5. Bremsanlage nach dem vorhergehenden Anspruch
- mit einer Kraft des Andrucks der Stellhebel (3.1) in Gegenrichtung zur Brems-Hubrichtung, die größer ist als die Nachstellkraft der Ratschen-Abstützung (3.2;4.2) in Brems-Hubrichtung.

6. Bremsanlage nach zumindest einem der beiden vorhergehenden Ansprüche
- mit jeweils einer auf Zapfen (3.3) der Hebelschwenklagerung gelagerten und gegen den Hebelring (3.4) sowie den jeweiligen Stellhebel (3.1) abgestützten Feder, insbesondere Bügelfeder (5), zur Erzielung des Andrucks.

7. Bremsanlage nach zumindest einem der vorhergehenden Ansprüche
- mit einer Ratschen-Abstützung in Form von einander zugeordneten, insbesondere jeweils im radialen Endbereich der Hebel (3.1) unter ansonsten tangentialem Abstand vorgesehenen Raststegen (3.2;4.2 bzw.2.2;4.3) mit ineinandergreifenden, in Ausgleichs-Verstellrichtung gegeneinander gleitbar jedoch in Gegenrichtung bewegungshemmend ausgebildeten Rastvorsprüngen, insbesondere Rastzähnen.

8. Bremsanlage nach dem vorhergehenden Anspruch
- mit über den Umfang des Hebelringes verteilten Raststegen mit im Sinne einer Zwischenzahn-Einststellbarkeit zueinander versetzten Rastvorsprüngen, insbesondere RastZähnen.

## Claims

1. Brake system, in particular a floating caliper-type disk brake, for a motor vehicle
- having an electromechanical wheel brake actuator, which is mounted on a caliper (1) of each wheel and comprises an electric motor (2) with a first axial lifting drive;
- having a self-energizing lever transmission (3) between the first axial lifting drive of the electric motor, on the one hand, and a second axial lifting drive for the brake linings (1.2; 1.3), on the other hand;
- having a mechanical adjusting apparatus in the style of a ratchet support (3.2;4.2) of the lever transmission (3) relative to the caliper (1) for automatically compensating the wear of the brake linings;
- having a mechanical adjusting apparatus in the style of a ratchet support (2.2;4.3) of the electric motor (2) relative to the caliper (1) for compensating an excessive lift of the first axial lifting drive as a result of wear of the brake linings (1.2;1.3).

2. Brake system according to the preceding claim
- having a lever transmission (3) in the form of a radially outer lever ring (3.4), distributed in a star-shaped manner over the periphery of which are adjusting levers (3.1), of which the radially outer ends are pivotally supported indirectly and/or directly in the lever ring (3.4) used for the ratchet connection (3.2;4.2) and of which the free, radially inner ends are loadable by the first axial lifting drive of the electric motor.

3. Brake system according to the preceding claim
- having loading of the second axial lifting drive, in particular in the form of a brake piston (1.4), in the lever region between the radially outer ends of the adjusting levers (3.1) capable of swivelling relative to the lever ring (3.4), on the one hand, and the radially inner, free ends loadable by the first lifting drive, on the other hand.

4. Brake system according to at least one of the two preceding claims
- having stop-like inhibiting of the adjusting levers (3.1) in the opposite direction to the brake lifting direction by virtue of pressure towards the lever ring (3.4).

5. Brake system according to the preceding claim
- having a force of the contact pressure of the adjusting levers (3.1) in the opposite direction to the brake lifting direction which is greater than the restoring force of the ratchet support (3.2;4.2) in brake lifting direction.

6. Brake system according to at least one of the two preceding claims
- having in each case a spring, in particular a fastening spring (5), which is mounted on pins (3.3) of the lever pivot bearing arrangement and supported against the lever ring (3.4) as well as the respective adjusting lever (3.1), for achieving the contact pressure.

7. Brake system according to at least one of the preceding claims
- having a ratchet support in the form of mutually associated detent webs (3.2;4.2 and/or 2.2;4.3), which in particular are provided in each case in the radial end region of the levers (3.1) at an otherwise tangential distance, with intermeshing detent projections, in particular detent teeth, which are designed so as to be slidable towards one another in compensating adjustment direction but inhibit movement in the opposite direction.

8. Brake system according to the preceding claim
- having detent webs, which are distributed over the periphery of the lever ring, with detent projections, in particular detent teeth, which are mutually offset in the sense of intermediate tooth adjustability.

## Revendications

1. Système de freinage, en particulier frein à disque du type à étrier flottant, pour un véhicule automobile,
- comportant un actionneur électromagnétique de frein de roue, monté sur un étrier (1) de frein de chaque roue et pourvu d'un moteur (2) électrique ayant un premier entraînement en translation axiale ;
- comportant une transmission (3) par levier auto renforçante entre le premier entraînement en translation axiale du moteur électrique d'une part et un deuxième entraînement en translation axiale pour les garnitures (1.2 ; 1.3) de frein d'autre part ;
- comportant un dispositif de compensation mécanique qui compense automatiquement l'usure des garnitures de frein, sous la forme d'un soutien (3.2 ; 4.2) à cliquet de la transmission (3) par levier par rapport à l'étrier (1) de frein ;
- comportant un dispositif de compensation mécanique qui compense une course excessive du premier entraînement en translation axiale en raison d'une usure des garnitures (1.2 ; 1.3) de frein, sous la forme d'un soutien (2.2 ; 4.3) à cliquet du moteur (2) électrique par rapport à l'étrier (1) de frein.

2. Système de freinage suivant la revendication précédente,
- comportant une transmission (3) par levier sous la forme d'une bague (3.4) à levier radialement extérieure, pourvue de leviers (3.1) de réglage répartis en étoile sur son pourtour, leviers dont les extrémités radialement extérieures sont montées indirectement ou directement à pivotement dans la bague (3.4) à leviers servant à la liaison (3.2 ; 4.2) à cliquet, et dont les extrémités libres, radialement intérieures, peuvent être sollicitées par le premier entraînement en translation axiale du moteur électrique.

3. Système de freinage suivant la revendication précédente,
- comportant une sollicitation du deuxième entraînement en translation axiale, notamment sous la forme d'un piston (1.4) de frein, dans la région des leviers qui est comprise entre, d'une part, les extrémités radialement extérieures des leviers (3.1) de réglage, pivotantes par rapport à la bague (3.4) à leviers, et, d'autre part, leurs extrémités libres radialement intérieures, pouvant être sollicitées par le premier entraînement en translation.

4. Système de freinage suivant au moins une des deux revendications précédentes,
- comportant un blocage par butée des leviers (3.1) de réglage en sens contraire à la course de freinage, par pression d'application contre la bague (3.4) à leviers.

5. Système de freinage suivant la revendication précédente,
- comportant une force de pression d'application des leviers (3.1) de réglage en sens contraire à la course de freinage qui est supérieure à la force de compensation du soutien (3.2 ; 4.2) à cliquet dans le sens de la course de freinage.

6. Système de freinage suivant au moins une des deux revendications précédentes,
- comportant, pour obtenir la pression d'application, un ressort respectif, notamment un ressort (5) en étrier, qui est monté sur des tenons (3.3) du montage pivotant des leviers et qui s'appuie contre la bague (3.4) à leviers ainsi que contre le levier (3.1) de réglage respectif.

7. Système de freinage suivant au moins une des revendications précédentes,
- comportant un soutien à cliquet sous la forme de nervures de crantage (respectivement 3.2; 4.2 ou 2.2; 4.3) mutuellement associées, notamment respectivement prévues dans la région terminale radiale des leviers (3.1), et par ailleurs à distance tangentielle, qui sont pourvues de saillies de crantage, notamment de dents de crantage, en engagement réciproque, à coulissement relatif dans le sens de déplacement de compensation, mais à blocage du déplacement dans le sens contraire.

8. Système de freinage suivant la revendication précédente,
- comportant des nervures de crantage réparties sur le pourtour de la bague à leviers, qui sont pourvues de saillies de crantage, notamment de dents de crantage, mutuellement décalées en vue d'une faculté de réglage de l'entredent.
